# EUROPÄISCHE PATENTSCHRIFT

(11) **EP 0 889 658 B1**
(45) Veröffentlichungstag und Bekanntmachung des Hinweises auf die Patenterteilung: **05.11.2003**
(21) Anmeldenummer: 98440137.2
(22) Anmeldetag: 19.06.1998
(51) Int. Cl.: H04Q 7/24, H04L 12/28, H04L 12/56, H04Q 7/22

(54) **Mobilfunknetz mit Anschlussvorrichtung zum Anschluss an Kommunikationsnetze**
Mobile radio network with connecting equipment towards communication networks
Réseau radio mobile avec dispositif de connexion à des réseaux de communication

(30) Priorität: 01.07.1997 DE 19728033
(43) Veröffentlichungstag der Anmeldung: 07.01.1999
(73) Patentinhaber: ALCATEL, 75008 Paris (FR)
(72) Erfinder: Engmann, Frank, 71032 Böblingen (DE)
(74) Vertreter: Knecht, Ulrich Karl, Dipl.-Ing.

(56) Entgegenhaltungen:
- WO-A-95/08900
- WO-A-95/20283
- WO-A-95/31060
- WO-A-96/21984
- AUSPURG H: "INTELLIGENZ IN MOBILFUNKNETZEN" FUNKSCHAU,DE,FRANZIS-VERLAG K.G. MUNCHEN, Bd. 62, Nr. 3, 26. Januar 1990 (1990-01-26), Seiten 56-57,61-62, XP000094700 ISSN: 0016-2841

## Beschreibung

Die Erfindung betrifft ein Mobilfunknetz für Mobilstationen, das eine erste Anschlußvorrichtung hat zum Anschluß des Mobilfunknetzes an Kommunikationsnetze, nach dem Oberbegriff des Anspruch 1.

Außerdem betrifft die Erfindung eine Anordnung zum Anschluß des Mobilfunknetzes an die Kommunikationsnetze nach dem nebengeordneten Anspruch.

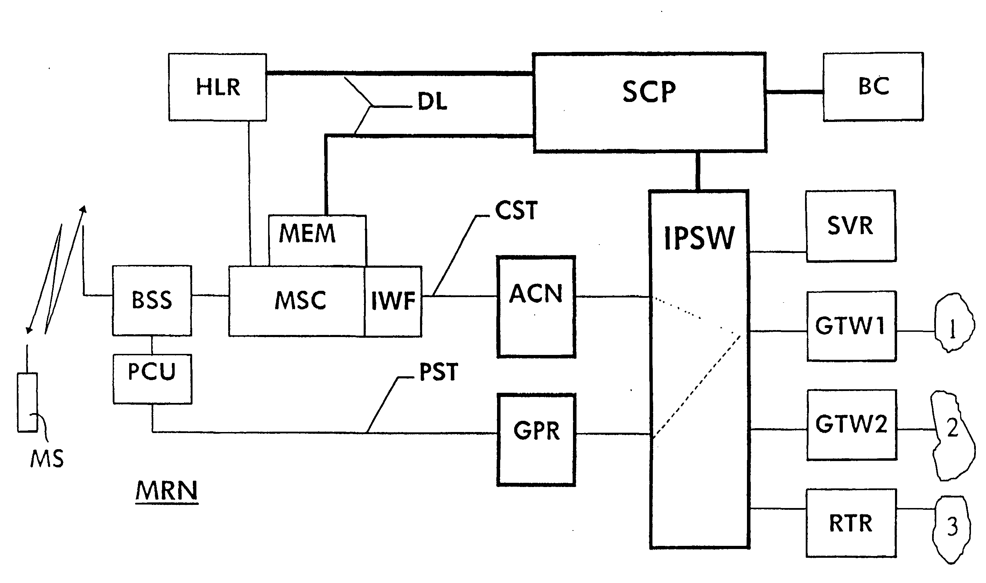

In der WO-A-9621984 wird beschrieben, mehrere Mobilfunknetze über ein Zentralnetz (siehe dort in Fig. 3 "Backbone") miteinander zu verbinden. Es gibt dazu jeweils für jedes Mobilfunknetz eine Anschlußvorrichtung ("SN1", "SN2" oder "SN3"), die zusammen mit dem Mobilfunknetz entweder nach einem ersten oder nach einem zweiten Verfahren Verbindungen aufbaut (siehe dort Seite 9, Zeilen 14 ff. "...may provide either circuit connection or packet switched data packet transmission..."). Es wird dort nicht beschrieben, wie zwischen einem Mobilfunknetz und mehreren verschiedenen Kommunikationsnetzen wahlweise Verbindungen hergestellt werden könnten.

Aus der WO-A-9531060 ist ein Mobilfunknetz bekannt, bei dem eine erste Anschlußvorrichtung (siehe dort in Fig. 3 "Circuit-Switched Transceiver 311") vorgesehen ist hat zum Anschluß des Mobilfunknetzes an ein Kommunikotionsnetz ("Local Area/Wide Area Network") mittels eines ersten Übertragungsverfahrens, nämlich mittels eines leitungvermittelten Übertrogungsverfahrens. Außerdem ist dort auch eine eine zweite Anschlußvorrichtung ("Packet-Switched Transceiver") vorgesehen zum Anschluß des Mobilfunknetzes an das Kommunikationsnetz mittels eines zweiten Übertragungsverfahrens, nämlich mittels eines paketvermittelten Verfahrens. Außerdem gibt es dort eine Vorrichtung ("Network Interface") zum Aufbau von wahlfreien Verbindungen zwischen jeder der Anschlußvorrichtungen und dem einen Kommunikationsnetz. Die Entscheidung welche Verbindungsart geschaltet wird trifft diese Vorrichtung auf der Grundlage des Nachrichtentyps eines jeden Datenpakets (siehe dort Seite 5, Zeilen 24 ff.). So wird bei Nachrichten kurzen Typs ("short type") das paketvermittelnde Netz ausgewählt, hingegen bei Nachrichten langen Typs ("lang type") das leitungsvermittelnde Netz ausgewählt (siehe dort Seite 8, Zeilen 29 ff.).

Andere Kriterien und Auswerteeinrichtungen, die für die Wahl der Verbindung herangezogen werden könnten, sind dort nicht beschrieben. Auch werden die Verbindungen zu dem einen Kommunikationsnetz ("Local Area/Wide Area Network"), an das die Nachrichtenquelle angeschlossen ist, aufgebaut. Es wird dort nicht beschrieben, wie dos Mobilfunknetz mit mehreren verschiedenen Netzen wahlweise verbunden werden könnte.

Bei einem aus der WO-A-9508900 bekannten Mobilfunknetz werden Anschlussvorrichtungen (siehe dort Fig. 2 "GSW" und "IWF") beschrieben, die Verbindungen zu Kommunikationsnetzen oder Teilen davon ("PSTN" oder "Router23") herstellen. Es wirden jedoch zumindest auf der Luftschnittstelle und in dem Mobilfunknetz selbst immer nur Verbindungen des gleichen Typs, nämlich leitungsvermittelnde Verbindungen hergestellt (siehe dort Seite 3, Zeilen 19 ff. "necessary to use a circuit-switched conection" oder Seite 6, Zeilen 35 ff.), wobei zu dem einen Datennetz (siehe in Fig. 1 das LAN "24") eine paketvermittelnde Verbindung simuliert wird (siehe z.B. Seite 10, Zeilen 26 ff.). Auf der Luftschnittstelle wird die dort bestehende leitungsvermittelnde Verbindung nur dann unterbrochen, wenn größere Pausen in der Übertragung auftreten (siehe dort Seite 11, Zeilen 11 ff.). Auch hier werden keine weiteren Kriterien, Methoden oder Vorrichtungen beschrieben, insbesondere keine mit denen zwischen dem Mobilfunknetz und mehreren verschiedenen Kommunikationsnetzen wahlweise Verbindungen hergestellt werden könnten.

In dem Artikel "Ericsson's partnership with Cisco System" von Chase Bailey und Ragnar Larsson auf Seiten 59 bis 63 in der Fachzeitschrift "Mobile Communications International" Nr. 34, September 1996, IBC Publishing Ltd., London (ISSN 0958 157 X) ist ein Mobilfunknetz für Mobilstationen, nämlich das sogenannte GSM (Global System for Mobile Communications) beschrieben. Das dortige Mobilfunknetz hat einen sogenannten "universal access server" (s. dort auf der Seite 61 in der Figur "AS 5200"), der dazu dient das Mobilfunknetz an Kommunikationssnetze wie beispielsweise an Ethernet-Datennetze oder an private Kommunikationsnetze anzuschließen. Der "universal access server' ist auf der Seite des Mobilfunknetzes über eine ISDN-Verbindung, d.h. über eine leitungsvermittelte Übertragungsstrecke, mit einer Mobilfunkvermittlungsstelle verbunden und ist auf der Seite der Kommunikationsnetze über eine paketvermittelte Übertragungsstrecke mit Netzknoten der Kommunikationsnetze verbunden. Demnach wird in dem dortigen Artikel ein Mobilfunknetz für Mobilstationen beschrieben, das eine erste Anschlußvorrichtung, nämlich den "universal access server", hat zum Anschluß des Mobilfunknetzes an Kommunikationsnetze mittels eines ersten Übertragungsverfahrens, nämlich dem leitungsvermittelten ISDN-Übertragungsverfahren. Bei diesem bekannten Mobilfunknetz erfolgt der Anschluß des Mobilfunknetzes über eine Anschlußvorrichtung nur mit Hilfe eines leitungvermittelten Übertragungsverfahrens. Damit das Mobilfunknetz an ein paketvermitteltes Kommunikationsnetz angeschlossen werden kann, muß innerhalb der Anschlußvorrichtung zwischen leitungsvermittelter und paketvermittelter Übertragung umgesetzt werden, d.h. es ist keine transparente Übertragung möglich.

Aufgabe der Erfindung ist es, ein Mobilfunknetz zu schaffen, das mittels einer Anordnung an Kommunikationsnetze anschließbar ist, die auch eine transparente Übertragung ermöglicht.

Gelöst wird die Aufgabe durch ein Mobilfunknetz mit den Merkmalen nach Anspruch 1 und durch eine Anordnung für das Mobilfunknetz mit den Merkmalen nach dem nebengeordneten Anspruch.

Demnach wird vorgeschlagen, das Mobilfunknetz mit einer Anordnung auszustatten, die eine erste Anschlußvorrichtung hat zum Anschluß des Mobilfunknetzes an Kommunikationsnetze mittels eines ersten Übertragungsverfahrens, und die eine zweite Anschlußvorrichtung hat zum Anschluß des Mobilfunknetzes an die Kommunikationsnetze mittels eines zweiten Übertragungsverfahrens. Die Anordnung hat außerdem eine Vorrichtung zum Aufbau von wahlfreien Verbindungen zwischen jeder der Anschlußvorrichtungen und jedem der Kommunikationsnetze, sie hat mindestens einen Datenspeicher, der Daten enthält, die für jede Mobilstation angeben, welches der Übertragungsverfahren sie unterstützt, und sie hat eine Auswerteeinrichtung, die mit dem mindestens einen Datenspeicher und mit der Vorrichtung verbunden ist, und die zur Steuerung des Verbindungsaufbaus die gespeicherten Daten auswertet.

Dadurch wird erreicht, daß das Mobilfunknetz wahlweise über Anschlußvorrichtungen mit verschiedenen Übertragungsverfahren an Kommunikationsnetze angeschlossen werden kann. Je nachdem, welches Übertragungsverfahren eine Mobilstation unterstützt, wird zwischen ihr und einem Netzknoten oder Endgerät der Kommunikationsnetze eine Verbindung über die erste oder zweite Anschlußvorrichtung aufgebaut, d.h. wird das erste oder das zweite Übertragungsverfahren verwendet.

Außerdem enthält der mindestens eine Datenspeicher auch Daten, die für jede Mobilstation angeben, welchen der verschiedenen Kommunikationsdienste der Teilnehmer mittels des Mobilstation nutzen kann, wobei die Auswerteeinrichtung zur Steuerung des Verbindungsaufbaus auch diese gespeicherten Daten auswertet. Das ist vorteilhaft, falls die Teilnehmer des Mobilfunknetzes mittels der Mobilstationen verschiedene Kommunikationsdienste nutzt.

Gemäß den Unteransprüchen ergeben sich folgende besonders vorteilhafte Ausgestaltungen der Erfindung:

Vorteilhaft ist es, wenn das erste Übertragungsverfahren ein leitungsvermitteltes Übertragungsverfahren ist, wenn das zweite Übertragungsverfahren ein paketvermitteltes Übertragungsverfahren ist, und wenn der mindestens eine Datenspeicher für jede Mobilstation diejenigen Daten enthält, die angeben, ob die Mobilstation das leitungsvermittelte und/oder das paketvermittelte Überrtragungsverfahren unterstützt. Durch diese Maßnahmen wird das Mobilfunknetz an die beiden am häufigsten verwendeten Übertragungsverfahren angepaßt.

Besonders vorteilhaft ist es, wenn zudem die erste Anschlußvorrichtung eine Adapterschaltung enthält zum Umsetzen einer paketvermittelten Übertragung auf der Seite der Kommunikationsnetze in eine leitungsvermittelte Übertragung auf der Seite des Mobilfunknetzes, und wenn die zweite Anschlußvorrichtung einen Protokollumsetzer enthält zum Umsetzen eines Protokolls für die paketvermittelte Übertragung auf der Seite der Kommunikationsnetze in ein anderes Protokolls für eine ebenfalls paketvermittelte Übertragung auf der Seite des Mobilfunknetzes. Demnach benötigt die zweite Anschlußvorrichtung keine Adapterschaltung.

Von Vorteil ist es auch, wenn die Vorrichtung zum Aufbau von wahlfreien Verbindungen zwischen jeder der Anschlußvorrichtungen und jedem der Kommunikationsnetze eine paketvermittelnde Schaltvorrichtung ist, und wenn die Auswerteeinrichtung ein Dienstesteuerungspunkt eines Intelligenten Netzes ist, der mit dem mindestens einen Datenspeicher und mit der Schaltvorrichtung über Verbindungen des Intelligenten Netzes verbunden ist und der zum Verbindungsaufbau die gespeicherten Daten auswertet und die Schaltvorrichtung steuert. Dadurch können Elemente eines Intelligenten Netzes verwendet werden.

Zudem ist es vorteilhaft, wenn die Schaltvorrichtung paketvermittelte Verbindungen zwischen dem Mobilfunknetz und Netzknoten der Kommunikationsnetze herstellt entsprechend dem Internet-Protokoll. Das bedeutet, daß ein besonders schnelle Schaltvorrichtung, nämlich ein sogenannter IP-Switch verwendet wird. Darüber hinaus ist es von Vorteil, wenn das Mobilfunknetz mindestens eine Funkfeststation und damit verbundene Mobilfunkvermittlungstelle enthält, die die mindestens eine Funkfeststation mit der ersten Anschlußvorrichtung verbindet, daß dann der mindestens eine Datenspeicher zwei mit der Mobilfunkvermittlungstelle verbundene Datenspeicher umfaßt, von denen der eine Datenspeicher diejenigen Daten enthält, die angeben, welche der verschiedenen Kommunikationsdienste jeder Teilnehmer mittels der Mobilstation nutzen kann, und von denen der andere Datenspeicher diejenigen Daten enthält, die angeben, welches der Übertragungsverfahren jede Mobilstation unterstützt.

Außerdem ist es vorteilhaft, wenn die Vorrichtung zum Aufbau von wahlfreien Verbindungen zwischen jeder der Anschlußvorrichtungen und jedem der Kommunikationsnetze einen Daten- und Adreßbus enthält, auf den die Anschlußvorrichtungen und Netzknoten der Kommunikationsnetze zugreifen, und daß die Auswerteeinrichtung ein Dienstesteuerungspunkt eines Intelligenten Netzes ist, der mit dem mindestens einen Datenspeicher über Verbindungen des Intelligenten Netzes verbunden ist und der zum Verbindungsaufbau die gespeicherten Daten auswertet und den Zugriff auf den Daten- und Adreßbus steuert. Demnach kann auch für den Anschluß des Mobilfunknetzes an die Kommunikationsnetze anstelle einer Schaltvorrichtung eine Busstruktur eingesetzt werden.

Die Erfindung wird nun im folgenden anhand eines Ausführungsbeispiels beschrieben, wobei auf die einzige Figur Bezug genommen wird.

Die Figur zeigt die schematische Darstellung eines Mobilfunknetzes MRN mit einer im nachfolgenden noch beschriebenen Anordnung zum Anschluß des Mobilfunknetzes an drei Kommunikationsnetze 1, 2 und 3. Das dargestellte Mobilfunknetz MRN ist ein zellulares Mobilfunknetz mit mehreren Funkfeststationen, von denen beispielhaft nur eine Funkfeststation BSS dargestellt ist. Das Mobilfunknetz hat außerdem eine mit den Funkfeststationen BSS verbundene Mobilfunkvermittlungstelle MSC, die über eine Anpaßeinheit IWF -eine sogenannte "interworking function"- mit einer ersten Anschlußvorrichtung ACN verbunden ist. Diese erste Anschlußvorrichtung dient zum Anschluß des Mobilfunknetzes an die Kommunikationsnetze 1, 2 und 3. Auf der Verbindungsstrecke zwischen der Mobilfunkvermittlungsstelle MSC und dieser ersten Anschlußvorrichtung ACN wird ein erstes Übertrogungsverfahren CST verwendet, in diesem Beispiel ein leitungsvermitteltes Übertragungsverfahren nach dem ISDN-Protokoll.

Das Mobilfunknetz MRN enthält neben der ersten Anschlußvorrichtung ACN auch eine zweite Anschlußvorrichtung GPR, die mit den Funkfeststationen BSS über Vorrichtungen PCU verbunden ist. Auf der Verbindungsstrecke zwischen den Funkfeststationen und dieser zweiten Anschlußvorrichtung GPR wird ein zweites Übertragungsverfahren PST verwendet, nämlich ein paketvermitteltes Übertragungsverfahren. Das Mobilfunknetz MRN versorgt mehrere Mobilstationen, von denen beispielhaft nur eine eizige Mobilstation MS in der Figur dargestellt ist.

Es wird im folgenden näher beschrieben, wie Verbindungen zwischen den Mobilstationen MS und den Kommunikationsnetzen 1,2 und 3 aufgebaut werden, wobei eine Übertragung über die erste und/oder über die zweite Anschlußvorrichtung erfolgt, d. h. wobei das erste und /oder zweite Übertragungsverfahren verwendet wird. Zum Anschluß des Mobilfunknetzes an die verschiedenen Kommunikationsnetze ist eine Vorrichtung IPSW zum Aufbau von wahlfreien Verbindungen zwischen jeder der Anschlußvorrichtungen ACN oder GPR und jedem der Kommunikationsnetze 1, 2 oder 3 vorgesehen. In diesem Beispiel ist die Vorrichtung IPSW, ein sogenannter IP-Switch, der virtuelle Übertragungskanäle für eine paketvermittelte Übertragung zwischen den Anschlußvorrichtungen ACN oder GPR und den Zugangsknoten GTW1 oder GTW2 und anderen Knoten RTR der Kommunikationsnetze herstellt. In diesem Beispiel sind GTW1 und GTW2 sogenannte "gateways" zu einem privaten Datennetz 1 bzw. zum öffentlichen Fernsprechnetz 2; der Knoten RTR ist ein sogenannter "router" zum Internet.

Die Vorrichtung IPSW wird von einer Auswerteeinrichtung SCP gesteuert. Diese Auswerteeinrichtung SCP ist ein Dienstesteuerungspunkt (im Englischen "service control point" genannt) eines intelligenten Netzes, der über Verbindungen des intelligenten Netzes DL mit der Vorrichtung IPSW und mit den Datenspeichern des Mobilfunknetzes verbunden ist. Diese Datenspeicher sind zum einen ein erster Datenspeicher HLR, der mit der Mobilfunkvermittlungsstelle MSC verbunden ist und ein zweiter Datenspeicher MEM, der Bestandteil der Mobilfunkvermittlungsstelle MSC ist. In den beiden Datenspeichern sind folgende Daten abgelegt: In dem Datenspeicher HLR sind die Daten abgelegt, die für jede Mobilstation angeben, welche Kommunikationsdienste die Mobilstation unterstützt. In dem anderen Datenspeicher MEM ist für jede Mobilstation angegeben, welche Übertrogungsverfahren die Mobilstation unterstützt. Durch Auswertung der in den Datenspeichern HLR und MEM abgelegten Daten stellt die Auswertevorrichtung SCP fest, welche der beiden Anschlußvorrichtungen zum Aufbau der Verbindung verwendet werden.

Die durch die Auswertevorrichtung SCP gesteuerte Vorrichtung IPSW dient im wesentlichen zum Informationsaustausch zwischen den Anschlußvorrichtungen und den Zugangsknoten sowie zwischen der Auswerteeinrichtung und den Anschlußvorrichtungen. Das bedeutet, daß die Vorrichtung IPSW im wesentlichen die Funktion eines Verbindungsnetzwerkes hat, über das Informationen geleitet werden. Die Auswertevorrichtung steuert dieses Verbindungsnetzwerk.

Zusätzlich zu der Auswertevorrichtung SCP ist noch ein Diensterechner SVR vorgesehen, der mit der Vorrichtung IPSW verbunden ist. Dieser Diensterechner, kurz "server" genannt, dient zur Unterstützung von Applikationen, die die beschriebene Konfiguration benutzen. In diesem Ausführungsbeispiel ist der Diensterechner ein sogenannter "mail server", der den Dienst "elektronische Post", kurz "e-mail" genannt, unterstützt. Der Diensterechner SVR sorgt dafür, daß jede "e-mail" übertragen wird unabhängig davon, ob der Verbindungsweg über die eine Anschaltvorrichtung ACN oder die andere Anschaltvorrichtung GPR geleitet wird. Der Diensterechner beispielsweise auch ein sogenannter "video server" sein, der eine Übertragung für Bildtelefonie unterstützt. Dazu werden die Bild- und Sprachdaten über die leitungsvermittelnde Anschaltvorrichtung ACN und die Bedien- und Steuerdaten über die andere Anschaltvorrichtung GPR geleitet. Hierdurch wird sichergestellt, daß die Nutzdaten für Bild und Ton über einen leitungsvermittelten Weg, d.h. über einen zeitlich stabilen Weg, übertragen werden.

Der Aufbau eines Übertragungsweges wird nun näher beschrieben. Beispielsweise soll ein Ruf von dem ersten Kommunikationsnetz 1 kommend zu der Mobilstation MS aufgebaut werden (im Englischen "mobile terminated call" genannt):

Dazu zeigt derNetzzugangsknoten GTW1 an, welches Übertragungsverfahren und welcher Kommunikationsdienst gewünscht wird. Es sollen beispielsweise an die Mobilstation MS Nutzdaten gesendet werden, wobei ein Paketdatendienst, nämlich der sogenannte "general paket radio service" genutzt werden soll. Die Auswerteeinrichtung SCP stellt nun fest, ob die Mobilstation MS diesen diesen Kommunikationsdienst "general paket radio service" (im weiteren auch kurz GPRS genannt) unterstützt, indem sie den Inhalt des Datenspeichers MEM auswertet. Außerdem stellt die Auswerteeinrichtung SCP fest, ob die Mobilstation berechtigt ist, diesen Kommunikationsdienst GPRS in Anspruch zu nehmen, indem sie den Inhalt des Datenspeichers HLR auswertet. Falls die Mobilstation berechtigt ist, diesen Kommunikationsdienst in Anspruch zu nehmen, kann prinzipiell eine Verbindung aufgebaut werden. Falls weiterhin die Mobilstation MS in der Lage ist, Daten des GPRS, das heißt paketvermittelte Daten zu empfangen, wird die Verbindung über die zweite Anschlußvorrichtung GPR aufgebaut. Dazu steuert die Auswerteeinrichtung SCP die Vorrichtung IPSW so, daß ein virtueller Datenkanal von dem Netzzugangsknoten GTW1 zu der zweiten Anschlußvorrichtung GPR aufgebaut wird.

Die Vorrichtung IPSW ist ein sogenannter IP-Switch, das heißt eine nach dem Internet-Protokoll arbeitende Schaltvorrichtung, die nicht jedes einzelne Datenpaket lenkt (im Englischen "hop by hop routing" genannt), sondern die versucht, mehrere zusammenhängende Datenpakete (sogenannte "flows") über einen virtuellen Datenkanal zu lenken. Dadurch wird ein höherer Datendurchsatz erreicht. Der Aufbau und die Funktion eines IP-Switches ist etwa in der Produktbeschreibung "IP Switching" vom 10 Juli 1996 erstellt von der Firma "Ipsilon Networks, Sunnyvale CA, USA beschrieben. Diese Produktbeschreibung ist auch im Internet unter der Adresse "www.ipsilon.com/productinfo/wp-ipswitch.htm" abrufbar. Anstelle des hier genannten IP-Switches kann auch jede andere Vorrichtung verwendet werden, die geeignet ist, logische Verbindungen zwischen den Kommunikationsnetzen und dem Mobilfunknetz herzustellen, wie beispielsweise ein Bus-System mit Daten- und Adreßbus.

Ist der logische Datenkanal aufgebaut, so können die Nutzdaten von dem Kommunikationsnetz 1 über den Netzzugangsknoten GTW1 und über den IP-Switch IPSW zu der zweiten Anschlußvorrichtung GPR übertragen werden. Diese Übertragung erfolgt im paketvermittelten Übertragungsverfahren, wobei das Internet-Protokoll verwendet wird. Es kann auch ein anderes Protokoll für paketvermittlete Übertragung verwendet werden, wie etwa das X-75-Protokoll. Die anschließende Übertragung von der zweiten Anschlußvorrichtung GPR zu der Funkfeststation BSS und zu der Mobilstation MS erfolgt ebenfalls als paketvermittelte Übertragung, jedoch mittels eines anderen Protokolls. Demnach setzt die zweite Anschlußvorrichtung GPR von einem Protokoll in ein anderes um. Auf dem Übertragungsweg ist eine Adapterschaltung PCU der Funkfeststation vorgeschaltet, um das Format der zu übertragenden Daten an ein Format anzupassen, das für die Datenübertragung über die Luftschnittstelle vorgesehen ist. In diesem Beispiel erfüllt das Mobilfunknetz den GSM-Standard; das bedeutet, daß über die Luftschnittstelle die Daten im TDMA-Verfahren übertragen werden.

Für den hier genannten Dienst GPRS ist der Aufbau der Verbindung die zweite Anschlußvorrichtung besser geeignet als über die erste Anschlußvorrichtung. Falls jedoch die Mobilstation die Übertragung über die zweite Anschlußvorrichtung GPR nicht unterstützt, das heißt falls sie keine paketvermittelte Übertragung unterstützt, so steuert die Auswertevorrichtung SCP den IP-Switch derart, daß die Verbindung über die erste Anschlußvorrichtung ACN aufgebaut wird. Die erste Anschlußvorrichtung ACN ermöglicht eine andere Übertragung, nämlich eine leitungsvermittelte Übertragung. Die leitungsvermittelte Übertragung erfolgt zwischen der ersten Anschlußvorrichtung ACN und der Mobilstation MS über den folgenden Kommunikationspfad: über die sogenannte "interworking function" IWF, über die Mobilfunkvermittlungsstelle MSC und über die Funkfeststation BSS. Die leitungsvermittelte Übertragung hat gegenüber der paketvermittelten Übertragung den Nachteil, daß eine logische Verbindung zwischen einer Nachrichtenquelle und einer Nachrichtensenke auch dann besteht, wenn zeitweise keine Daten übertragen werden müssen. Bei der paketvermittelten Übertragung hingegen wird eine logische Verbindung nur dann genutzt, wenn tatsächlich Daten übertragen werden sollen.

Das mit der erfindungsgemäßen Anordnung ausgestattete Mobilfunknetz ist in der Lage, je nach Anforderung, den optimalen Übertragungspfad zu wählen. Dadurch wird sichergestellt, daß die Übertragungsrecourcen optimal genutzt werden können. Außerdem kann die Wahl des Übertragungspfades in Abhängigkeit des gewünschten Kommunikationsdienstes gewählt werden. Zu einer einzigen Mobilstation kann nicht nur ein Übertragungspfad aufgebaut werden. Es können auch mehrere Übertragungspfade mit verschiedenen Übertragungsverfahren aufgebaut werden, was besonders im Bereich von Multi-Media-Anwendungen wünschenswert ist.

Die Wahl jedes Übertragungsverfahrens wird davon abhängig gemacht, welchen Zustand die Mobilstation MS zur Zeit einnimmt. Das heißt es wird beispielsweise aus dem Datenspeicher HLR abgefragt, welchen sogenannten "call state" die Mobilstation einnimmt. Der "call state" beschreibt, welchen Kommunikationsdienst die Mobilstation zur Zeit bereits in Anspruch nimmt und welches Übertragungsverfahren zur Zeit verwendet wird. Die beschriebene Anordnung, die im wesentlichen aus der Auswerteeinrichtung und der von ihr gesteuerten Vorrichtung besteht, ermöglicht eine flexible Auswahl der möglichen Verbindungswege und Übertragungsverfahren. Die Erfindung ist nicht nur auf die Anzahl von zwei verschiedenen Anschlußvorrichtungen und Übertragungsverfahren beschränkt; sie ist auch dort einsetzbar, wo mehrere verschiedene Anschlußvorrichtungen und Übertragungsverfahren verwendet werden.

Wie in der Figur schematisch dargestellt, ist die Auswerteeinrichtung SCP auch mit einem sogenannten "billing center" BC verbunden. Diese Einrichtung "billing center" BC dient dazu, die bei der Nutzung der Kommunikationsdienste und -wege anfallenden Gebühren zu berechnen. Im Beispiel einer paketvermittelten Übertragung werden die Kosten im wesentlichen an Hand des tatsächlich anfallenden Datenvolumens berechnet. Im Falle einer leitungsvermittelten Übertragung steigen die Kosten mit der Nutzungsdauer der benutzten Leitungen. Die Wahl jedes Übertragungsverfahrens kann auch davon abhängig gemacht, welche Gebührentarife der Teilnehmer für welche Kommunikationsdienste gebucht hat.

## Patentansprüche

1. Mobilfunknetz (MRN) für Mobilstationen (MS), das eine erste Anschlußvorrichtung (ACN) hat zum Anschluß des Mobilfunknetzes an Kommunikationsnetze (1, 2, 3) mittels eines ersten Übertragungsverfahrens (CST), dos eine zweite Anschlußvorrichtung (GPR) hat zum Anschluß des Mobilfunknetzes an die Kommunikationsnetze (1, 2, 3) mittels eines zweiten Übertragungsverfahrens (PST), und das eine Vorrichtung (IPSW) hat zum Aufbau von wahlfreien Verbindungen zwischen jeder der Anschlußvorrichtungen (ACN, GPR) und jedem der Kommunikationsnetze (1,2,3), **gekennzeichnet durch**
mindestens einen Datenspeicher (HLR, MEM), der Daten enthält, die für jede Mobilstation (MS) angeben, welches der Übertragungsverfahren (CST, PST) sie unterstützt, und **durch** eine Auswerteeinrichtung (SCP), die mit dem mindestens einen Datenspeicher (HLR, MEM) und mit der Vorrichtung (IPSW) verbunden ist, und die zur Steuerung des Verbindungsaufbaus die gespeicherten Daten auswertet, bei dem
ein Teilnehmer des Mobilfunknetzes (MRN) mittels seiner Mobilstation (MS) verschiedene Kommunikationsdienste nutzt, bei dem der mindestens eine Datenspeicher (HLR, MEM) auch Daten enthält, die für jede Mobilstation (MS) angeben, welchen der verschiedenen Kommunikationsdienste der Teilnehmer mittels des Mobilstation (MS) nutzt, und bei dem die Auswerteeinrichtung (SCP) zur Steuerung des Verbindungsaufbaus auch diese gespeicherten Daten auswertet.

2. Mobilfunknetz (MRN) nach Anspruch 1, **dadurch gekennzeichnet, daß** das Mobilfunknetz mindestens eine Funkfeststation (BSS) und eine damit verbundene Mobilfunkvermittlungstelle (MSC) enthält, die die mindestens eine Funkfeststation (BSS) mit der ersten Anschlußvorrichtung (ACN) verbindet, und daß der mindestens eine Datenspeicher zwei mit der Mobilfunkvermittlungstelle (MSC) verbundene Datenspeicher (HLR, MEM) umfaßt, von denen der eine Datenspeicher (HLR) diejenigen Daten enthält, die angeben, welche der verschiedenen Kommunikationsdienste jeder Teilnehmer mittels der Mobilstation (MS) nutzt, und von denen der andere Datenspeicher (MEM) diejenigen Daten enthält, die angeben, welches der Übertragungsverfahren (CST, PST) jede Mobilstation (MS) unterstützt.

3. Mobilfunknetz (MRN) nach Anspruch 1, **dadurch gekennzeichnet, daß** das erste Übertragungsverfahren ein leitungsvermitteltes Übertragungsverfahren (CST) ist, daß das zweite Übertragungsverfahren ein paketvermitteltes Übertragungsverfahren (PST) ist, und daß der mindestens eine Datenspeicher (HLR, MEM) für jede Mobilstation (MS) diejenigen Daten enthält, die angeben, ob die Mobilstation (MS) das leitungsvermittelte und/oder das paketvermittelte Ubertragungsverfahren unterstützt.

4. Mobilfunknetz (MRN) nach Anspruch 3, **dadurch gekennzeichnet, daß** die erste Anschlußvorrichtung (ACN) eine Adapterschaltung enthält zum Umsetzen einer paketvermittelten Übertragung auf der Seite der Kommunikationsnetze (1, 2, 3) in eine leitungsvermittelte Übertragung (CST) auf der Seite des Mobilfunknetzes (MRN), und daß die zweite Anschlußvorrichtung (GPR) einen Protokollumsetzer enthält zum Umsetzen eines Protokolls für die paketvermittelte Übertragung auf der Seite der Kommunikationsnetze (1, 2, 3) in ein anderes Protokolls für eine ebenfalls paketvermittelte Übertragung (PST) auf der Seite des Mobilfunknetzes (MRN).

5. Mobilfunknetz (MRN) nach Anspruch 1, **dadurch gekennzeichnet, daß** die Vorrichtung zum Aufbau von wahlfreien Verbindungen zwischen jeder der Anschlußvorrichtungen (ACN, GPR) und jedem der Kommunikationsnetze (1, 2, 3) eine paketvermittelnde Schaltvorrichtung (IPSW) ist, und daß die Auswerteeinrichtung ein Dienstesteuerungspunkt (SCP) eines Intelligenten Netzes ist, der mit dem mindestens einen Datenspeicher (HLR, MEM) und mit der Schaltvorrichtung (IPSW) über Verbindungen (DL) des Intelligenten Netzes verbunden ist und der zum Verbindungsaufbau die gespeicherten Daten auswertet und die Schaltvorrichtung (IPSW) steuert.

6. Mobilfunknetz (MRN) nach Anspruch 5, **dadurch gekennzeichnet, daß** die Schaltvorrichtung (IPSW) paketvermittelte Verbindungen zwischen dem Mobilfunknetz (MRN) und Netzknoten (GTW1, GTW2, RTR) der Kommunikationsnetze (1, 2, 3) herstellt entsprechend dem Internet-Protokoll oder dem X-75-Protokoll.

7. Mobilfunknetz noch Anspruch 1, **dadurch gekennzeichnet, daß**
die Vorrichtung zum Aufbau von wahlfreien Verbindungen zwischen jeder der Anschlußvorrichtungen und jedem der Kommunikationsnetze einen Daten- und Adreßbus enthält, auf den die Anschlußvorrichtungen und Netzknoten der Kommunikationsnetze zugreifen, und daß die Auswerteeinrichtung ein Dienstesteuerungspunkt eines Intelligenten Netzes ist, der mit dem mindestens einen Datenspeicher über Verbindungen des Intelligenten Netzes verbunden ist und der zum Verbindungsaufbau die gespeicherten Daten auswertet und den Zugriff auf den Daten- und Adreßbus steuert.

8. Anordnung zum Anschluß eines Mobilfunknetzes (MRN) für Mobilstationen (MS) an Kommunikationsnetze (1, 2, 3), die eine erste Anschlußvorrichtung (ACN) hat zum Anschluß des Mobilfunknetzes an die Kommunikationsnetze (1, 2, 3) mittels eines ersten Übertragungsverfahrens (CST), die eine zweite Anschlußvorrichtung (GPR) hat zum Anschluß des Mobilfunknetzes an die Kommunikationsnetze (1, 2, 3) mittels eines zweiten Übertragungsverfahrens (PST), und die eine Vorrichtung (IPSW) hat zum Aufbau von wahlfreien Verbindungen zwischen jeder der Anschlußvorrichtungen (ACN, GPR) und jedem der Kommunikationsnetze (1,2,3),**gekennzeichnet durch**
mindestens einen Datenspeicher (HLR, MEM), der Daten enthält, die für jede Mobilstation (MS) angeben, welches der Übertragungsverfahren (CST, PST) sie unterstützt, und **durch** eine Auswerteeinrichtung (SCP), die mit dem mindestens einen Datenspeicher (HLR, MEM) und mit der Vorrichtung (IPSW) verbunden ist, und die zur Steuerung des Verbindungsaufbaus die gespeicherten Daten auswertet, bei dem
ein Teilnehmer des Mobilfunknetzes (MRN) mittels seiner Mobilstation (MS) verschiedene Kommunikationsdienste nutzt, bei dem der mindestens eine Datenspeicher (HLR, MEM) auch Daten enthält, die für jede Mobilstation (MS) angeben, welchen der verschiedenen Kommunikationsdienste der Teilnehmer mittels des Mobilstation (MS) nutzt, und bei dem die Auswerteeinrichtung (SCP) zur Steuerung des Verbindungsaufbaus auch diese gespeicherten Daten auswertet.

## Claims

1. Mobile radio network (MRN) for mobile stations (MS), which has a first connecting device (ACN) for connecting the mobile radio network to communications networks (1, 2, 3) by means of a first transmission method (CST), which has a second connecting device (GPR) for connecting the mobile radio network to the communications networks (1, 2, 3) by means of a second transmission method (PST), and which has a device (IPSW) for setting up optional connections between each of the connecting devices (ACN, GPR) and each of the communications networks (1, 2, 3), **characterised by**
at least one data memory (HLR, MEM), which contains data specifying for each mobile station (MS) which of the communication methods (CST, PST) it supports, and an evaluation facility (SCP), which is connected to the at least one data memory (HLR, MEM) and to the device (IPSW), and evaluates the stored data for controlling the connection set-up, in which
a user of the mobile radio network (MRN) uses various communication services with his mobile station (MS), in which the at least one data memory (HLR, MEM) also contains data that specifies for each mobile station (MS) which of the various communication services the user uses with the mobile station (MS), and in which the evaluation facility (SCP) also evaluates this stored data for controlling the connection set-up.

2. Mobile radio network (MRN) according to Claim 1, **characterised in that** the mobile radio network contains at least one base station (BSS) and connected to it a mobile radio switching centre (MSC), which connects the at least one base station (BSS) with the first connecting device (ACN),and that the at least one data memory includes two data memories (HLR, MEM) connected to the mobile radio switching centre (MSC), of which two the one data memory (HLR) contains the data specifying which of the different communications services each user uses with the mobile station (MS), and the other data memory (MEM) contains the data specifying which of the transmission methods (CST, PST) each mobile station (MS) supports.

3. Mobile radio network (MRN) according to Claim 1, **characterised in that** the first transmission method is a circuit-switched transmission method (CST), that the second transmission method is a packet-switched transmission method (PST), and that the at least one data memory (HLR, MEM) contains for each mobile station (MS) the data specifying whether the mobile station (MS) supports the circuit-switched and/or the packet-switched transmission method.

4. Mobile radio network (MRN) according to Claim 3, **characterised in that** the first connecting device (ACN) contains an adapter circuit for converting a packet-switched transmission on the side of the communications networks (1, 2, 3) to a circuit-switched transmission (CST) on the side of the mobile radio network (MRN), and that the second connecting device (GPR) contains a protocol converter for converting a protocol for the packet-switched transmission on the side of the communications networks (1, 2, 3) into a different protocol for a likewise packet-switched transmission (PST) on the side of the mobile radio network (MRN).

5. Mobile radio network (MRN) according to Claim 1, **characterised in that** the device for setting up optional connections between each of the connecting devices (ACN, GPR) and each of the communications networks (1, 2, 3) is a packet-switching device (IPSW), and that the evaluation facility is a service control point (SCP) of an intelligent network, and this service control point is connected to the at least one data memory (HLR, MEM) and to the switching device (IPSW) through connections (DL) of the intelligent network, and evaluates the stored data and controls the switching device (IPSW) for the connection set-up.

6. Mobile radio network (MRN) according to Claim 5, **characterised in that** the switching device (IPSW) establishes packet-switched connections between the mobile radio network (MRN) and network nodes (GTW1, GTW2, RTR) of the communications networks (1, 2, 3) according to the Internet protocol or the X-75 protocol.

7. Mobile radio network (MRN) according to Claim 1, **characterised in that** the device for setting up optional connections between each of the connecting devices and each of the communications networks contains a data and address bus, which is accessed by the connecting devices and network nodes of the communications networks, and that the evaluation facility is a service control point of an intelligent network, and this service control point is connected to the at least one data memory through connections of the intelligent network, and for the connection set-up evaluates the stored data and controls the access to the data and address bus.

8. Arrangement for connecting a mobile radio network (MRN) for mobile stations (MS) to communications networks (1, 2, 3), which has a first connecting device (ACN) for connecting the mobile radio network to the communications networks (1, 2, 3) by means of a first transmission method (CST), and which has a second connecting device (GPR) for connecting the mobile radio network to the communications networks (1, 2, 3) by means of a second transmission method (PST), and which has a device (IPSW) for setting up optional connections between each of the connecting devices (ACN, GPR) and each of the communications networks (1, 2, 3), **characterised by**
at least one data memory (HLR, MEM), which contains data specifying the transmission method (CST, PST) supported respectively by each mobile station (MS), and an evaluation facility (SCP), which is connected to at least one data memory (HLR, MEM) and to the device (IPSW), and which evaluates the stored data for controlling the connection set-up, in which
a user of the mobile radio network (MRN) uses various communication services with his mobile station (MS), in which the at least one data memory (HLR, MEM) also contains data that specifies for each mobile station (MS) which of the various communication services the user uses with the mobile station (MS), and in which the evaluation facility (SCP) also evaluates this stored data for controlling the connection set-up.

## Revendications

1. Réseau de télécommunications mobile (MRN) pour stations mobiles (MS), qui comporte un premier dispositif de connexion (ACN) pour la connexion du réseau de télécommunications mobile aux réseaux de communication (1, 2, 3) au moyen d'un premier procédé de transmission (CST), qui comporte un second dispositif de connexion (GPR) pour la connexion du réseau de télécommunications mobile aux réseaux de communication (1, 2, 3) au moyen d'un second procédé de transmission (PST) et qui comporte un dispositif (IPSW) pour la mise en place de connexions au choix entre chacun des dispositifs de connexion (ACN, GPR) et chacun des réseaux de communication (1, 2, 3), **caractérisé par**
au moins une mémoire de données (HLR, MEM) qui contient les données qui signalent pour chaque station mobile (MS) lequel des procédés de transmission (CST, PST) elle prend en charge, et par un dispositif d'analyse (SCP) qui est relié avec l'une des mémoires de données (HLR, MEM) au moins et avec le dispositif (IPSW), et qui analyse les données enregistrées pour commander la mise en place de la connexion, pour lequel un utilisateur du réseau de télécommunications mobile (MRN) utilise différents services de communication au moyen de sa station mobile (MS), pour lequel l'une des mémoires de données (HLR, MEM) au moins contient également des données qui signalent pour chaque station mobile (MS) lequel des différents services de communication l'utilisateur utilise au moyen de la station mobile (MS) et pour lequel le dispositif d'analyse (SCP) analyse également ces données enregistrées pour la commande de la mise en place de la connexion.

2. Réseau de télécommunications mobile (MRN) selon la revendication 1, **caractérisé en ce que** le réseau de télécommunications mobile comprend au moins une station de base (BSS) et un centre de commutation du service mobile (MSC) qui lui est relié, qui relie au moins l'une des stations de base (BSS) avec le premier dispositif de connexion (ACN) et que l'une des mémoires de données au moins comprend deux mémoire de données (HLR, MEM) reliées avec le centre de commutation du service mobile (MSC), dont l'une des mémoires de données (HLR) contient les données qui signalent lesquels des différents service de communication chaque utilisateur utilise au moyen de la station mobile (MS) et dont l'autre mémoire de données (MEM) contient les données qui signalent lequel des procédés de transmission (CST, PST) chaque station mobile (MS) prend en charge.

3. Réseau de télécommunications mobile (MRN) selon la revendication 1, **caractérisé en ce que** le premier procédé de transmission est un procédé de transmission par commutation de circuits (CST), que le deuxième procédé de transmission est un procédé de transmission par commutation par paquets (PST) et qu'au moins l'une des mémoires de données (HLR, MEM) contient, pour chaque station mobile (MS), les données qui signalent si la station mobile (MS) prend en charge le procédé de transmission par commutation de circuits et/ou le procédé de transmission par commutation par paquets.

4. Réseau de télécommunications mobile (MNR) selon la revendication 3, **caractérisé en ce que** le premier dispositif de connexion (ACN) comporte un circuit d'adaptation pour la conversion d'une transmission par commutation par paquets du côté des réseaux de communication (1, 2, 3) en une transmission par commutation de circuits (CST) du côté du réseau de télécommunications mobile (MRN), et que le second dispositif de connexion (GPR) comporte un convertisseur de protocole pour la conversion d'un protocole pour la transmission par commutation par paquets du côté des réseaux de communication (1, 2, 3) en un autre protocole pour une transmission toujours par commutation par paquets (PST) du côté du réseau de télécommunications mobile (MRN).

5. Réseau de télécommunications mobile (MRN) selon la revendication 1, **caractérisé en ce que** le dispositif pour la mise en place de connexions au choix entre chacun des dispositifs de connexion (ACN, GPR) et chacun des réseaux de communication (1, 2, 3) est un dispositif de commutation par commutation par paquets (IPSW) et que le dispositif d'analyse est un point de contrôle de service (SCP) d'un réseau intelligent, qui est relié avec l'une des mémoires de données (HLR, MEM) au moins et qui est relié avec le dispositif de commutation (IPSW) par des connexions (DL) du réseau intelligent et qui analyse les données mémorisées pour la mise en place de la connexion et qui commande le dispositif de commutation (IPSW).

6. Réseau de télécommunications mobile (MRN) selon la revendication 5, **caractérisé en ce que** le dispositif de commutation (IPSW) crée des connexions par commutation par paquets entre le réseau de télécommunications mobile (MRN) et les noeuds (GTW1, GTW2, RTR) des réseaux de communication (1, 2, 3) selon le protocole Internet ou le protocole X-75.

7. Réseau de télécommunications mobile (MRN) selon la revendication 1, **caractérisé en ce que** le dispositif de mise en place des connexions au choix entre chacun des dispositifs de connexion et chacun des réseaux de communication comporte un bus de données et d'adresse, auquel les dispositifs de connexion et les noeuds des réseaux de communication ont accès, et que le dispositif d'analyse est un point de contrôle de service du réseau intelligent, qui est relié avec l'une des mémoires de données au moins par des connexions du réseau intelligent et qui analyse les données mémorisées pour la mise en place de la connexion et commande l'accès au bus de données et d'adresse.

8. Disposition pour connexion d'un réseau de télécommunications mobile (MRN) pour stations mobiles (MS) à des réseaux de communication (1, 2, 3), qui comporte un premier dispositif de connexion (ACN) pour la connexion du réseau de télécommunications mobile aux réseaux de communication (1, 2, 3) au moyen d'un premier procédé de transmission (CST), qui comporte un second dispositif de connexion (GPR) pour la connexion du réseau de télécommunications mobile aux réseaux de communication (1, 2, 3) au moyen d'un second procédé de transmission (PST) et qui comporte un dispositif (IPSW) pour la mise en place de connexions au choix entre chacun des dispositifs de connexion (ACN, GPR) et chacun des réseaux de communication (1, 2, 3), **caractérisé par**
au moins une mémoire de données (HLR, MEM) qui contient les données qui signalent pour chaque station mobile (MS) lequel des procédés de transmission (CST, PST) elle prend en charge, et par un dispositif d'analyse (SCP) qui est relié avec l'une des mémoires de données (HLR, MEM) au moins et avec le dispositif (IPSW), et qui analyse les données enregistrées pour commander la mise en place de la connexion, pour lequel un utilisateur du réseau de télécommunications mobile (MRN) utilise différents services de communication au moyen de sa station mobile (MS), pour lequel l'une des mémoires de données (HLR, MEM) au moins contient également des données qui signalent pour chaque station mobile (MS) lequel des différents services de communication l'utilisateur utilise au moyen de la station mobile (MS) et dans lequel le dispositif d'analyse (SCP) analyse également ces données enregistrées pour la commande de la mise en place de la connexion.
